# FASCICULE DE BREVET EUROPEEN

(11) **EP 1 131 683 B1**
(45) Date de publication et mention de la délivrance du brevet: **17.11.2004**
(21) Numéro de dépôt: 00962585.6
(22) Date de dépôt: 08.09.2000
(51) Int. Cl.: G05B 19/042, G01R 19/165, G01R 19/155

(54) **CIRCUIT LOGIQUE D'ENTREE ADAPTABLE EN FONCTION DE LA TENSION D'ENTREE ET A FAIBLE DISSIPATION THERMIQUE**
THERMISCH VERLUSTARME UND SPANNUNGSANPASSBARE LOGISCHE EINGANGSSCHALTUNG
LOGIC INPUT CIRCUIT ADAPTABLE IN FUNCTION OF INPUT VOLTAGE AND WITH A LOW THERMAL DISSIPATION

(30) Priorité: 10.09.1999 FR 9911491
(43) Date de publication de la demande: 12.09.2001
(73) Titulaire: SOPRANO, F-38090 Vaulx Milieu (FR)
(72) Inventeur: PIRON, Patrick, F-38080 L'Isle d'Abeau (FR); DREVON, Richard, F-38080 L'Isle d'Abeau (FR); FRANCOIS, Olivier chez SOPRANO, Parc Technolo-, 38 090 Vaulx Milieu (FR)
(74) Mandataire: Hecké, Gérard
(86) Numéro de dépôt international: PCT/FR2000/002484
(87) Numéro de publication internationale: WO 2001/020414

(56) Documents cités:
- EP-A- 0 107 797
- WO-A-90/04187
- WO-A-96/33086

## Description

### Domaine technique de l'invention

L'invention est relative à un circuit d'entrée logique pour un automatisme d'un équipement industriel alimenté par une source de tension continue, notamment une batterie, ledit circuit d'entrée comprenant des moyens de détection destinés à délivrer un signal de mesure représentatif de l'état logique lors de l'ouverture et de la fermeture d'un contact d'entrée, avec une dissipation thermique très réduite.

### Etat de la technique

Une carte entrée logique dans les équipements électroniques pour des automatismes d'installations embarquées, notamment de véhicules de transport ferroviaire, nécessite généralement un courant d'entrée important de l'ordre de 10mA. Le problème posé dans les équipements classiques est alors celui de la dissipation thermique dans les résistances de mesure, car une entrée logique sous une tension de 110 Volts par exemple, et un courant d'intensité de 10 mA, dissipera une puissance thermique de 1,1 W. La dissipation thermique globale est bien entendu proportionnelle au nombre d'entrées logiques, et nécessite souvent l'emploi de dispositifs de refroidissement par radiateur ou caloducs pour évacuer la chaleur vers l'extérieur. L'alimentation électrique de l'équipement s'effectuant à partir d'un réseau de sécurité à batterie d'accumulateurs, il en résulte en plus une perte d'énergie électrique du véhicule.

### Objet de l'invention

L'objet de l'invention consiste à réaliser un circuit d'entrée logique pour un automatisme, adaptable en tension sur une grande gamme de tensions d'entrées, et à dissipation thermique très réduite.

Le circuit d'entrée selon l'invention est caractérisé en ce qu'il comporte:
- un convertisseur d'énergie élévateur de tension composé d'une bobine d'inductance et d'un transistor de commutation, connectés à l'entrée du circuit,
- un détecteur de niveau logique branché soit entre la bobine d'inductance et une diode de redressement d'un circuit de récupération d'énergie, soit entre une résistance de charge et la source de tension continue,
- et un circuit d'horloge pilotant la commutation du transistor par réglage de la fréquence et du rapport cyclique pour s'adapter en tension aux signaux appliqués à l'entrée, ainsi que la valeur de la surtension engendrée dans l'état logique haut par la bobine d'inductance lors de la commutation du transistor vers l'état bloqué.

La détection de l'état logique est opérée avec une très faible dissipation thermique évitant l'usage de radiateurs. La majorité de l'énergie est restituée à la batterie par le circuit de récupération d'énergie. La présence du convertisseur d'énergie associé à la bobine d'inductance évite l'emploi de transformateurs élévateur de tension.

Le détecteur de niveau logique comporte avantageusement un optocoupleur dont la diode émettrice est traversée par le courant de mesure, et un récepteur délivrant une image du signal de mesure à un circuit d'acquisition.

Selon une caractéristique de l'invention, le circuit de récupération d'énergie est doté de la résistance de charge branchée électriquement en série entre la diode de redressement et la batterie, ou la diode émettrice du détecteur de niveau logique. Un premier condensateur de filtrage est relié en parallèle entre la référence du potentiel de l'entrée et le point milieu de raccordement de la diode de redressement à la résistance. Un deuxième condensateur de filtrage est connecté entre les deux bomes d'entrée.

D'autres avantages et caractéristiques ressortiront plus clairement de la description qui va suivre d'un mode de réalisation de l'invention donné à titre d'exemple non limitatif, et représenté aux dessins annexés, dans lesquels :
- la figure 1 représente le schéma électrique d'un circuit d'entrée logique selon l'invention ;
- la figure 2 montre le schéma d'une variante.

### Description d'un mode de réalisation préférentiel

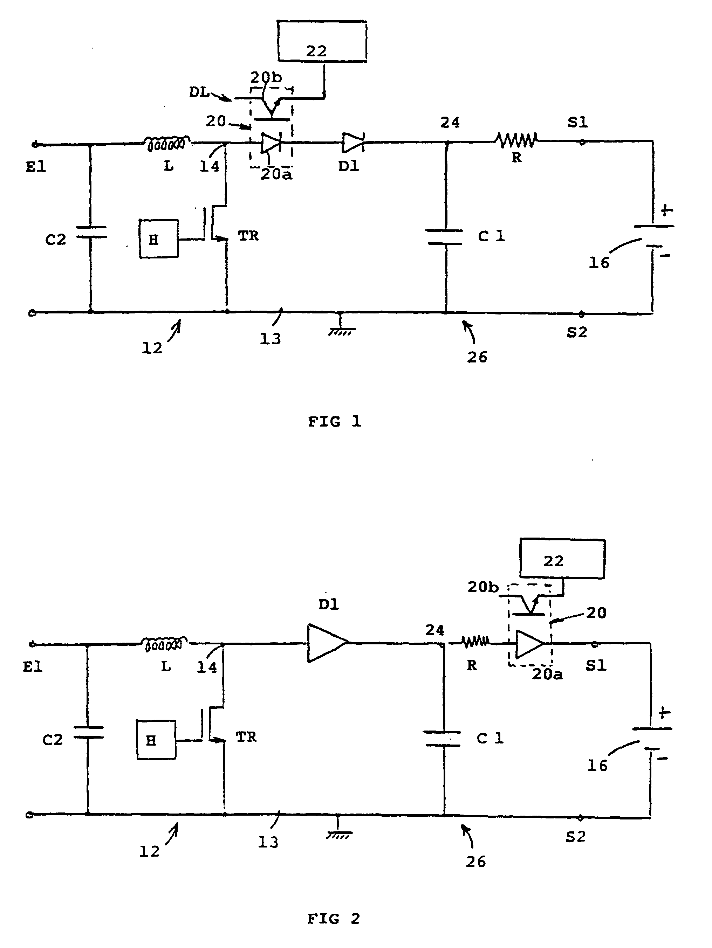

Sur la figure 1, un circuit d'entrée logique 10 d'un équipement électronique pour un automatisme industriel, comporte une entrée E1 connectée à un convertisseur d'énergie 12 élévateur de tension, lequel est composé d'une bobine d'inductance L associé à un transistor TR de commutation. L'émetteur du transistor TR de commutation est relié à la référence du potentiel de l'entrée 13, et le collecteur est branché au point milieu 14 de connexion de la bobine d'inductance L à un détecteur de niveau logique DL. La base du transistor TR est pilotée par un circuit d'horloge H destiné à assurer l'adaptation en tension des signaux d'entrée par réglage de la fréquence et du rapport cyclique. Il est ainsi possible d'appliquer à l'entrée E1 des valeurs de tensions comprises entre 24V et 110V selon le type de batterie 16. La référence du potentiel de l'entrée 13 est au potentiel du pôle négatif de la batterie 16.

Le détecteur de niveau logique DL est formé à titre d'exemple par un élément optocoupleur 20 dont le récepteur 20b délivre un signal de mesure SE à un circuit d'acquisition 22 de données, ledit signal de commande SE étant représentatif de l'état logique à l'entrée E1. L'anode de la diode émettrice 20a de l'optocoupleur 20 est branchée au point milieu 14, tandis que la cathode est reliée au pôle positif de la batterie 16 à travers une diode de redressement D 1 en série avec une résistance R. Un premier condensateur C1 de filtrage est connecté en parallèle entre la référence du potentiel de l'entrée 13, et le point milieu 24 de raccordement de la diode D1 à la résistance R. Un deuxième condensateur C2 de filtrage est branché entre la référence du potentiel de l'entrée 13 et l'autre entrée E1.

La diode de redressement D1, la résistance R et le premier condensateur C1 de filtrage forment un circuit de récupération d'énergie 26, dont les sorties S1 et S2 sont branchées en parallèle aux bornes de la batterie 16.

Le transistor TR de commutation peut être constitué par un transistor MOS, FET, IGBT, etc...Les autres circuits d'entrée logique (non représentés) sont identiques à celui décrit précédemment, et sont tous branchés en parallèle aux bornes de la batterie 16.

Le fonctionnement du circuit d'entrée logique 10 est le suivant:

Lee éléments du circuit d'entrée logique 10, notamment le transistor TR de commutation, sont dimensionnés pour la tension maximum d'entrée, par exemple 110V. L'entrée E1 est adaptative en tension par l'ajustage de la fréquence du circuit à horloge H, et par le réglage de son rapport cyclique. Elle permet ainsi de régler la durée de conduction et la durée de blocage du transistor TR de commutation.

Dans l'état logique bas (0), la tension appliquée à l'entrée E1 est nulle, et le blocage de la diode D1 empêche toute circulation de courant dans la bobine d'inductance L, que le transistor TR soit conducteur ou non conducteur. L'optocoupleur 20 reste également bloqué, et n'est traversé par aucun courant.

Dans l'état logique haut (1), la tension appliquée à l'entrée E1 est sensiblement égale à la tension de la batterie 16. Lorsque le transistor TR est passant, un courant s'établit entre l'entrée E1 et la référence du potentiel de l'entrée 13 en traversant la bobine d'inductance L. Après la commutation du transistor TR vers l'état bloqué, la bobine d'inductance L génère une surtension aux bornes du transistor TR, et le potentiel du point milieu 14 devient supérieur à celui de la sortie S1 reliée au pôle positif de la batterie 16. Un courant moyen de l'ordre de 10mA s'établit alors vers la batterie 16 en traversant la résistance R. La détection de l'état logique haut (1) intervient par l'émission du signal de mesure SE au circuit d'acquisition 22, laquelle est opérée avec une dissipation thermique très faible, car la majorité de l'énergie est restituée à la batterie 16 par le circuit de récupération d'énergie 26.

L'élévation de tension au point milieu 14 est relativement faible pour conserver un bon rendement, mais suffisante pour assurer le passage du courant moyen de 10 mA. La valeur de l'élévation de tension est fonction du rapport cyclique du transistor TR, et permet au circuit d'entrée logique 10 de travailler en courant constant indépendamment de la tension d'entrée. La borne du transistor TR à l'opposé du point milieu 14 se trouve avantageusement à la référence du potentiel de l'entrée, ce qui simplifie la commande simultanée de plusieurs transistors en cas d'une pluralité d'entrées logiques en parallèle.

En référence à la figure 2, l'optocoupleur 20 est déplacé de la tête vers le côté continu en étant électriquement connecté entre la résistance R et la source de tension continue 16.

## Revendications

1. Circuit d'entrée logique pour un automatisme d'un équipement industriel alimenté par une source de tension continue, notamment une batterie (16), ledit circuit d'entrée comprenant des moyens de détection destinés à délivrer un signal de mesure (SE) représentatif de l'état logique bas (0) et de l'état logique haut (1), **caractérisé en ce qu'**il comporte:
- un convertisseur d'énergie (12) élévateur de tension composé d'une bobine d'inductance (L) et d'un transistor (TR) de commutation, connectés à l'entrée (E1) du circuit (10),
- un détecteur de niveau logique (DL) branché soit entre la bobine d'inductance (L) et une diode de redressement (D1) d'un circuit de récupération d'énergie (26), soit entre une résistance de charge (R) et le pôle positif (S1) de la source de tension continue (16),
- et un circuit d'horloge (H) pilotant la commutation du transistor (TR) par réglage de la fréquence et du rapport cyclique pour s'adapter en tension aux signaux appliqués à l'entrée (E1), ainsi que la valeur de la surtension engendrée dans l'état logique haut (1) par la bobine d'inductance (L) lors de la commutation du transistor (TR) vers l'état bloqué.

2. Circuit d'entrée logique selon la revendication 1, **caractérisé en ce que** le transistor (TR) de commutation est connecté entre la référence du potentiel de l'entrée (13), et un point milieu (14) de connexion de la bobine d'inductance (L) au détecteur de niveau logique (DL) ou à la diode de redressement (D1).

3. Circuit d'entrée logique selon la revendication 1 ou 2, **caractérisé en ce que** le détecteur de niveau logique (DL) comporte un optocoupleur (20) ayant une diode émettrice (20a) reliée entre la bobine d'inductance (L) et la diode de redressement (D1), et un récepteur (20b) délivrant ledit signal de mesure (SE) à un circuit d'acquisition (22).

4. Circuit d'entrée logique selon la revendication 1 ou 2, **caractérisé en ce que** le détecteur de niveau logique (DL) comporte un optocoupleur (20) ayant une diode émettrice (20a) reliée entre la résistance de charge (R) et le pôle positif (S1) de la source de tension(16), et un récepteur (20b) délivrant ledit signal de mesure (SE) à un circuit d'acquisition (22).

5. Circuit d'entrée logique selon la revendication 1, **caractérisé en ce que** la résistance (R) du circuit de récupération d'énergie (26) est branchée électriquement en série entre la diode de redressement (D1) et la batterie (16) ou la diode émettrice (20a).

6. Circuit d'entrée logique selon la revendication 5, **caractérisé en ce qu'**un premier condensateur de filtrage (C1) est relié en parallèle entre la référence du potentiel de l'entrée (13) et le point milieu (24) de raccordement de la diode de redressement (D1) à la résistance (R).

7. Circuit d'entrée logique selon la revendication 6, **caractérisé en ce qu'**un deuxième condensateur de filtrage (C2) est relié en parallèle entre la référence du potentiel de l'entrée (13) et l'entrée (E1).

## Claims

1. A logic input circuit for an industrial equipment automatic control system supplied by a DC voltage source, in particular a battery (16), said input circuit comprising means for detection designed to deliver a measurement signal (SE) representative of logic low state (0) and of logic high state (1), **characterized in that** it comprises:
- a voltage step-up energy converter (12) composed of an inductance coil (L) and a switching transistor (TR), connected to the input (E1) of the circuit (10),
- a logic level detector (DL) connected either between the inductance coil (L) and a rectifier diode (D1) of an energy recovery circuit (26) or between a charging resistor (R) and the positive pole (S1) of the DC voltage source (16),
- and a clock circuit (H) controlling switching of the transistor (TR) by adjustment of the frequency and duty cycle to perform voltage matching with the signals applied to the input (E1), and also the value of the voltage surge generated in logic high state (1) by the inductance coil (L) when switching of the transistor (TR) to the off state takes place.

2. The logic input circuit according to claim 1, **characterized in that** the switching transistor (TR) is connected between the input potential reference (13) and a mid-point (14) of connection of the inductance coil (L) to the logic level detector (DL) or to the rectifier diode (D1).

3. The logic input circuit according to claim 1 or 2, **characterized in that** the logic level detector (DL) comprises an optocoupler (20) having an emitting diode (20a) connected between the inductance coil (L) and the rectifier diode (D1), and a receiver (20b) delivering said measurement signal (SE) to an acquisition circuit (22).

4. The logic input circuit according to claim 1 or 2, **characterized in that** the logic level detector (DL) comprises an optocoupler (20) having an emitting diode (20a) connected between the charging resistor (R) and the positive pole (S1) of the voltage source (16), and a receiver (20b) delivering said measurement signal (SE) to an acquisition circuit (22).

5. The logic input circuit according to claim 1, **characterized in that** the resistor (R) of the energy recovery circuit (26) is electrically connected in series between the rectifier diode (D1) and the battery (16) or the emitting diode (20a).

6. The logic input circuit according to claim 5, **characterized in that** a first filtering capacitor (C1) is connected in parallel between the input potential reference (13) and the mid-point (24) of connection of the rectifier diode (D1) to the resistor (R).

7. The logic input circuit according to claim 6, **characterized in that** a second filtering capacitor (C2) is connected in parallel between the input potential reference (13) and the input (E1).

## Patentansprüche

1. Logische Eingangsschaltung für eine Steuerung einer industriellen Ausrüstung, die über eine Gleichstromquelle, insbesondere eine Batterie (16), versorgt wird, welche Eingangsschaltung Erfassungsmittel umfasst, die ein Messsignal (SE) liefern sollen, das den unteren logischen Zustand (0) und den oberen logischen Zustand (1) wiedergibt, **dadurch gekennzeichnet, dass** sie umfasst:
- einen spannungserhöhenden Energiewandler (12), bestehend aus einer Induktivität (L) und einem Schalttransistor (TR), die an den Eingang (E1) der Schaltung (10) gelegt sind,
- einen Messfühler (DL) für die logische Ebene, der entweder zwischen der Induktivität (L) und einer Gleichrichterdiode (D1) eines Energierückgewinnungskreislaufs (26) oder zwischen einen Ladewiderstand (R) und den Pluspol (S1) der Gleichspannungsquelle (16) geschaltet ist,
- und eine Taktgeberschaltung (H), die das Schalten des Transistors (TR) durch Steuerung der Frequenz und des zyklischen Verhältnisses zur Spannungsanpassung an die an den Eingang (E1) gelegten Signale und die Höhe der im oberen logischen Zustand (1) durch die Induktivität (L) beim Schalten des Transistors (TR) in den blockierten Zustand erzeugten Überspannung steuert.

2. Logische Eingangsschaltung nach Anspruch 1, **dadurch gekennzeichnet, dass** der Schalttransistor (TR) zwischen der Spannungsreferenz des Eingangs (13) und einen Anschluss-Mittelpunkt (14) der Induktivität (L) an den Messfühler (DL) zur Erfassung der logischen Ebene oder die Gleichrichterdiode (D1) geschaltet ist.

3. Logische Eingangsschaltung nach Anspruch 1 oder 2, **dadurch gekennzeichnet, dass** der Messfühler zur Erfassung der logischen Ebene (DL) einen OptoKoppler (20) umfasst, dessen Emitterdiode (20a) zwischen die Induktivität (L) und die Gleichrichterdiode (D1) geschaltet ist, und einen Empfänger (20b), der das Messsignal (SE) an eine Erfassungsschaltung (22) liefert.

4. Logische Eingangsschaltung nach Anspruch 1 oder 2, **dadurch gekennzeichnet, dass** der Messfühler zur Erfassung der logischen Ebene (DL) einen OptoKoppler (20) umfasst, dessen Emitterdiode (20a) zwischen den Ladewiderstand (R) und den Pluspol (S1) der Spannungsquelle (16) geschaltet ist, und einen Empfänger (20b), der das Messsignal (SE) an eine Erfassungsschaltung (22) liefert.

5. Logische Eingangsschaltung nach Anspruch 1, **dadurch gekennzeichnet, dass** der Widerstand (R) des Energierückgewinnungskreislaufs (26) elektrisch in Serie zwischen die Gleichrichterdiode (D1) und die Batterie (16) oder die Emitterdiode (20a) geschaltet ist.

6. Logische Eingangsschaltung nach Anspruch 5, **dadurch gekennzeichnet, dass** ein erster Glättungskondensator (C1) zwischen der Spannungsreferenz des Eingangs (13) und dem Anschluss-Mittelpunkt (24) der Gleichrichterdiode (D1) zum Widerstand (R) parallelgeschaltet ist.

7. Logische Eingangsschaitung nach Anspruch 6, **dadurch gekennzeichnet, dass** ein zweiter Glättungskondensator (C2) zwischen der Spannungsreferenz des Eingangs (13) und dem Eingang (E1) geschaltet ist.
